# EUROPÄISCHE PATENTSCHRIFT

(11) **EP 4 392 211 B1**
(45) Veröffentlichungstag und Bekanntmachung des Hinweises auf die Patenterteilung: **09.07.2025**
(21) Anmeldenummer: 23711000.2
(22) Anmeldetag: 10.03.2023
(51) Int. Cl.: B25J 9/00

(54) **VORRICHTUNG ZUM UNTERSTÜTZEN WENIGSTENS EINES ARMS**
DEVICE FOR SUPPORTING AT LEAST ONE ARM
DISPOSITIF DE SUPPORT D'AU MOINS UN BRAS

(30) Priorität: 11.03.2022 DE 102022105745
(43) Veröffentlichungstag der Anmeldung: 03.07.2024
(73) Patentinhaber: Ottobock SE & Co. KGaA, 37115 Duderstadt (DE)
(72) Erfinder: MERKER, Maximilian Anton, 37115 Duderstadt (DE); KÄSMANN, Simon, 37115 Duderstadt (DE); PAPP, Emese, 37115 Duderstadt (DE)
(74) Vertreter: Gramm, Lins & Partner Patent- und Rechtsanwälte PartGmbB
(86) Internationale Anmeldenummer: PCT/EP2023/056152
(87) Internationale Veröffentlichungsnummer: WO 2023/170263

(56) Entgegenhaltungen:
- EP-A1- 3 278 938
- DE-A1- 102018 119 755
- DE-A1- 102019 113 684
- DE-B4- 102017 112 436

## Beschreibung

Die Erfindung betrifft eine Vorrichtung zum Unterstützen wenigstens eines Armes eines Benutzers.

Eine derartige Vorrichtung ist beispielsweise aus der DE 10 2017 112 436 B4 bekannt. Vorrichtungen zum Unterstützen eines Armes eines Benutzers sind aus dem Stand der Technik seit langem bekannt und werden beispielsweise verwendet, um den Benutzer bei Arbeiten über Kopf zu unterstützen. Vorzugsweise verfügt eine hier beschriebene Vorrichtung über wenigstens einen Aktuator, besonders bevorzugt einen passiven Aktuator, der eingerichtet ist, eine Kraft auf ein Armstützelement aufzubringen, das beispielsweise mit einer Armschale versehen ist, um an den Arm des Benutzers angelegt zu werden. Die Kraft, die von dem Aktuator auf das Armstützelement aufgebracht wird, sorgt dafür, dass auf den Arm, der in der Armschale angeordnet ist, eine nach oben, also der Schwerkraft entgegen, wirkende Kraft wirkt. Diese Kraft benötigt ein Gegenlager, das durch den Hüftgurt gebildet wird. So ist es möglich, die Gegenkraft in die Hüfte des Trägers einzuleiten. Um die Gegenkraft, die der vom Aktuator aufgebrachten Kraft entgegenwirkt, in den Hüftgurt einzuleiten, wird das Kraftübertragungselement verwendet.

Eine derartige Vorrichtung ist beispielsweise aus der US 2016/0081871 A1 bekannt. Sie verfügt über ein Gegenlagerelement, das in Form eines um den Rumpf des Benutzers herumlegbaren Gurtes ausgebildet ist. An ihm befinden sich zwei entlang des Rückens zur Schulter verlaufende Stützstreben, die oberhalb und seitlich neben den Schultern des Benutzers mit jeweils einem Gelenk verbunden sind, so dass der Arm angehoben werden kann. An den entsprechenden Gelenken sind Federelemente angeordnet, durch die eine nach oben gerichtete Kraft auf die Armschalen ausgeübt werden kann, so dass beispielsweise beim Heben schwerer Gegenstände oder beim Arbeiten über Kopf eine Unterstützung der Arme erfolgen kann. Sollen die Arme gesenkt werden, muss durch die Arme ein Druck auf die Armschalen ausgeübt werden, der die von den Federelementen aufgebrachte Kraft übersteigt, so dass die Arme absinken.

Die EP 3 278 938 A1 zeigt eine Vorrichtung, bei der ein Werkzeug an einer gelenkigen Stange angeordnet wird, die mit einer Vorrichtung verbunden ist, die an dem Rumpf des Trägers angeordnet wird und einen großen Teil des Gewichtes, vorzugsweise das gesamte Gewicht des Werkzeugt aufnimmt. Der Arm des Trägers wird dabei nicht direkt unterstützt.

Die DE 10 2019 113684 A1 beschreibt eine Vorrichtung zum Unterstützen wenigstens eines Armes eines Benutzers, bei der durch ein Rückhalteelement verhindert wird, dass die Armschale unkontrolliert in Richtung der Hand des Benutzers entlanggleitet. Die DE 10 2109 119755 A1 offenbart eine ähnliche Vorrichtung, bei der die unterstützende Kraft und der Winkelbereich, in dem sie aufgebracht wird, einstellbar ist.

Es hat sich herausgestellt, dass es für die Bewegungsfreiheit des Armes wenn der Benutzer die Vorrichtung trägt von großem Vorteil ist, wenn das Kraftübertragungselement mittels eines Gelenkes an dem Hüftgurt angeordnet ist. Vorzugsweise handelt es sich bei dem Gelenk um ein Kugelgelenk, es sind jedoch auch Ausgestaltungen bekannt, bei denen es sich bei dem Gelenk um ein einfaches Scharniergelenk handelt, das eine Schwenkbewegung des Kraftübertragungselementes relativ zum Hüftgurt um eine einzige Schwenkachse erlaubt.

In der Regel wird das Gelenk durch ein erstes Gelenkteil und ein zweites Gelenkteil gebildet, die relativ zueinander bewegbar aneinander angeordnet sind. Die Arten der möglichen Bewegung und die Freiheitsgrade der Bewegung hängen von der Art des gewählten Gelenkes ab. In bevorzugten Ausgestaltungen wird das erste Gelenkteil durch ein erstes Ende des Kraftübertragungselement des gebildet oder ist an diesem angeordnet. Dieses erste Gelenkteil wird dann in einer Aufnahme angeordnet, die das zweite Gelenkteil bildet und vorzugsweise mit dem Hüftgurt verbunden ist. Bei dem ersten Gelenkteil kann es sich beispielsweise um die Kugel eines Kugelgelenkes oder einen Stift eines Scharniers Handeln. Das zweite Gelenkteil ist dann beispielsweise die Kugelaufnahme oder Gelenkspfanne des Kugelgelenks oder die Buchse eines Scharniers. Die Aufnahme ist dabei für den Kraftschluss äußerst wichtig, da die vom Kraftübertragungselement abgeleitete Kraft über das Gelenk und damit über das zweite Gelenkteil, also die Aufnahme, in den Hüftgurt abgeleitet werden soll. Daher ist eine möglichst sichere und feste Verbindung zwischen dem zweiten Gelenkteil und dem Hüftgurt notwendig.

Die hier beschriebenen Vorrichtungen werden in der Regel verwendet, um den Benutzer bei Arbeiten zu unterstützen, die beispielsweise in der Automobilindustrie oder der Flugzeugherstellung anfallen. Weitere Anwendungsbereiche sind beispielsweise handwerkliche Tätigkeiten, bei denen über Kopf gearbeitet wird, beispielsweise Malerarbeiten, oder Tätigkeiten, bei denen über einen längeren Zeitraum Werkzeuge, beispielsweise Bohrmaschinen, in einer erhöhten Position gehalten werden müssen. Die Vorrichtungen sind dabei oftmals Verschmutzungen ausgesetzt, die eine Reinigung nötig oder zumindest wünschenswert machen.

Nachteilig ist, dass die Reinigung der Vorrichtung nur schwer möglich ist.

Der Erfindung liegt daher die Aufgabe zugrunde, eine Vorrichtung der hier beschriebenen Art so weiterzuentwickeln, dass die Nachteile aus dem Stand der Technik behoben oder zumindest vermindert werden.

Die Erfindung löst die gestellte Aufgabe durch eine Vorrichtung zum Unterstützen wenigstens eines Armes eines Benutzers, wobei die Vorrichtung wenigstens ein Trägerelement und wenigstens ein Kraftübertragungselement aufweist, das mittels eines Gelenkes an dem Trägerelement angeordnet wobei das Gelenk an einer Befestigungseinrichtung angeordnet ist und das Trägerelement eine Tasche aufweist, in die die Befestigungseinrichtung eingeschoben ist.

Die Tasche ist vorzugsweise an der Außenseite des Trägerelementes, also der Seite, die im angelegten Zustand der Vorrichtung vom Körper des Benutzers, vorzugsweise vom Rumpf des Benutzers abgewandt ist, angeordnet. In diesem Zustand kommt es daher nicht zu einem Störgefühl beim Benutzer der Vorrichtung. Die Befestigungseinrichtung ist im angelegten Zustand in die Tasche eingeschoben. Eine separate Befestigung innerhalb der Tasche beispielsweise durch Formschlusselemente wie einen Klettverschluss oder wenigstens einen Druckknopf, ist möglich, jedoch nicht notwendig. Um die Befestigungseinrichtung folglich in der Tasche anzuordnen, wird sie entlang einer Bewegungsrichtung in die Tasche eingeschoben. Die dafür notwenige Bewegung der Befestigungseinrichtung ist vorzugsweise eine lineare Bewegung ohne Richtungsänderung. Um die Befestigungseinrichtung wieder aus der Tasche zu entfernen, wird die Befestigungseinrichtung in die der Bewegungsrichtung entgegengesetzte Richtung verschoben. Dazu ist es von Vorteil, aber nicht notwendig, dass keine weiteren Befestigungen der Befestigungseinrichtung in der Tasche vorhanden sind. Damit ist es besonders einfach möglich, die Vorrichtung zu demontieren und so beispielsweise textile Elemente zu reinigen. Vorzugsweise ist das Trägerelement ein waschbares, besonders bevorzugt rein textiles Element.

Vorzugsweise ist das Trägerelement im angelegten Zustand der Vorrichtung im Bereich des Beckens des Benutzers angeordnet oder erstreckt sich dorthin. Dabei ist das Trägerelement vorzugsweise ein Hüftgurt, eine Jacke, eine Hose und/oder eine Weste oder weist einen Hüftgurt, eine Jacke, eine Hose und/oder eine Weste auf. Vorzugsweise wird die vom Kraftübertragungselement übertragene Kraft in das Trägerelement und von dort in den Beckenbereich des Benutzers eingeleitet. Das Trägerelement stützt sich vorzugweise an der Hüfte und/oder dem Becken des Benutzers ab.

Vorzugsweise ist die Befestigungseinrichtung als Befestigungsplatte ausgebildet.

In einer vorteilhaften Ausgestaltung ist die Tasche als Rahmen oder Teilrahmen ausgebildet. Eine als Rahmen ausgebildete Tasche hat einen umlaufenden Rand, der beispielsweise rechteckig ausgebildet ist. Er ist über einen Teil des Umfanges mit dem Trägerelement fest verbunden, beispielsweise vernäht oder verklebt. Dieser Teil des Umfanges wird als Festteil bezeichnet. Über einen anderen Teil des Umfanges ist der Rand oder Rahmen nicht mit dem Trägerelement verbunden, sondern bildet die Öffnung der Tasche, durch die die Befestigungseinrichtung eingeschoben werden kann. Dieser Teil des Umfangs wird Öffnungsteil genannt. Vorzugsweise ist der Öffnungsteil kleiner als der Festteil. Ist die Tasche rechteckig, 3-eckig oder polygon ausgebildet, wird der Öffnungsteil vorzugsweise durch eine der Strecken des Umfanges gebildet. Bei einer rechteckigen Tasche ist es von Vorteil, wenn drei Seiten des Randes den Festteil und die verbleibende vierte Seite des Randes den Öffnungsteil bilden.

Eine als Teilrahmen ausgebildete Tasche hat einen nicht vollständig umlaufenden Rand. Auch diese Tasche kann rechteckig ausgebildet sein, wobei vorzugsweise entlang einer Seite, vorzugsweise einer langen Seite, kein Rand vorhanden ist. In einer bevorzugten Ausgestaltung entspricht der Teilrahmen dem Festteil einer als Rahmen ausgebildeten Tasche.

Der Rand einer als Rahmen oder Teilrahmen ausgebildeten Tasche ist beispielsweise ein Band oder Gurt, der eine Breite aufweist. Die Breite ist quer zur Längserstreckung des Gurtes definiert und ist bei einem Band oder Gurt die Richtung mit der zweitgrößten Ausdehnung. Über einen Teil der Breite ist dieser Rand mit dem Trägerelement verbunden, sofern er den Festteil des Randes bildet. Dabei ist vorzugsweise der radial äußere Teil des Gurtes mit dem Trägerelement verbunden, insbesondere vernäht oder verklebt. Zwischen diesen Rand und das Trägerelement wird die Befestigungseinrichtung eingeschoben.

Vorzugsweise verfügt die Vorrichtung über wenigstens ein Verschlusselement, beispielsweise eine Lasche, durch die die Tasche verschließbar ist. Nachdem die Befestigungseinrichtung in die Tasche eingeschoben wurde, kann die Tasche vorzugsweise durch die Lasche verschlossen werden. Dazu wird die Lasche über die Öffnung der Tasche gelegt und beispielsweise an der Tasche oder dem Trägerelement befestigt. Dadurch wird verhindert, dass die in die Tasche eingeschobene Befestigungseinrichtung einfach aus der Tasche herausgezogen werden kann, indem sie in die dem Einschieben entgegengesetzte Richtung bewegt wird. Um die Befestigungseinrichtung aus der Tasche zu entfernen, muss zunächst die Lasche geöffnet werden.

Vorzugsweise verfügt die Lasche über wenigstens ein Formschlusselement, beispielsweise eine Klettelement und/oder einen Druckknopf. Am Trägerelement und/oder der Tasche ist ein entsprechendes Gegenelement angeordnet. Wird die Lasche geschlossen wird das Formschlusselement der Lasche mit dem entsprechenden Gegenelement in Eingriff gebracht und so eine formschlüssige Verbindung hergestellt.

In einer bevorzugten Ausgestaltung ist das Gelenk in verschiedenen Positionen und/oder in verschiedenen Orientierungen an der Befestigungseinrichtung positionierbar. Dazu verfügt das Gelenk, vorzugsweise der Teil des Gelenkes, der an der Befestigungseinrichtung positioniert werden soll, über ein Befestigungselement, vorzugsweise ein Formschlusselement. Dieses kann ein Klettelement, ein Druckknopf oder eine Clips-Element sein. An der Außenseite der Befestigungseinrichtung, an der das Gelenk angeordnet werden soll, befindet sich vorzugsweise ein entsprechendes Gegenelement. Durch Ineingriffbringen der beiden Elemente lässt sich das Gelenk an der Befestigungseinrichtung positionieren. Die Formschlusselemente und Gegenelemente können eine diskrete Positionierung erlauben. Dies bedeutet, dass zwar unterschiedliche Positionen und/oder unterschiedliche Orientierungen möglich sind, diese jedoch nicht stufenlos einstellbar sind. Dies wird beispielsweise durch Clips Elemente und/oder Druckknöpfe erreicht. Alternativ dazu kann auch eine kontinuierliche Positionierung möglich sein, wenn beispielsweise Klettelemente verwendet werden. Dies bedeutet, dass innerhalb vorbestimmter Grenzen die Position und/oder die Orientierung stufenlos gewählt werden kann.

In einer bevorzugten Ausgestaltung ist die Befestigungseinrichtung aus einem Kunststoff hergestellt. Dadurch wird eine ausreichende Stabilität erreicht. Besonders bevorzugt handelt es sich um einen plastisch verformbaren Kunststoff, sodass die Form der Befestigungseinrichtung an die Körperkontur des Trägers angepasst werden kann.

Alternativ dazu ist die Befestigungseinrichtung zumindest teilweise, vorzugsweise vollständig aus einem elastisch verformbaren Material hergestellt.

Bevorzugt ist die Befestigungseinrichtung anatomisch geformt. Dabei ist die Befestigungseinrichtung an den Teil des Benutzers der Vorrichtung angepasst, an dem die Befestigungseinrichtung im angelegten Zustand der Vorrichtung anliegt oder angelegt wird. Die Anpassung kann eine Standardanpassung sein, die an die Körperformen und/oder Körpermaße eines standardisierten Benutzers angepasst ist. Der Standard kann beispielsweise eine durchschnittliche Körperform oder Körperteilform des jeweiligen Körperteiles sein. Insbesondere für den Fall, dass die Befestigungseinrichtung plastisch verformbar ist, ist eine standardisierte anatomische Formgebung ausreichend. Die Befestigungseinrichtung ist dann zwar nicht genau an die individuelle Passform des Körperteiles des Benutzers angepasst, folgt jedoch eine Standardform dieses Körperteiles, so dass voraussichtlich nur kleinere Änderungen an der Form der Befestigungseinrichtung vorgenommen werden müssen, um sie individuell an den Benutzer anzupassen. Alternativ dazu ist die Befestigungseinrichtung vorzugsweise an die individuelle Form eines Körperteiles des Benutzers der Vorrichtung angepasst.

In einer bevorzugten Ausgestaltung ist die Befestigungseinrichtung seitlich in die Tasche eingeschoben. Besonders bevorzugt bedeutet dies, dass die Befestigungseinrichtung entlang der Längsrichtung des Trägerelementes in die Tasche eingeschoben wird. Alternativ dazu ist es auch möglich, dass die Befestigungseinrichtung von oben, also im angelegten Zustand der Schwerkraft folgend, in die Tasche eingeschoben wird. Diese Ausgestaltung hat den Vorteil, dass ein versehentliches Herausrutschen der Befestigungseinrichtung aus der Tasche auch ohne Verschlusselement sicherer vermieden werden kann.

Vorzugsweise sind die Tasche und die Befestigungseinrichtung derart ausgebildet, dass die Befestigungseinrichtung in mehreren Positionen in der Tasche arretierbar ist. Auf diese Weise lässt sich auch die Position des Gelenkes, das an der Befestigungseinrichtung angeordnet ist, einstellen. Dies ist insbesondere dann von Vorteil, wenn für unterschiedliche Größen unterschiedlicher Benutzer nur eine einzige Form und Art der Befestigungseinrichtung vorgehalten werden soll. Eine individuelle Einstellbarkeit kann dann erreicht werden, wenn alternativ oder zusätzlich zur veränderbaren Position und/Orientierung des Gelenkes an der Befestigungseinrichtung auch unterschiedliche Positionen der Befestigungseinrichtung innerhalb der Tasche möglich sind.

Vorzugsweise ist die Befestigungseinrichtung in der Tasche arretierbar, in dem ein Formschlusselement der Tasche mit einem Gegenelement der Befestigungseinrichtung zusammenwirkt. Dazu kann beispielsweise die Befestigungseinrichtung einen oder mehrere Vorsprünge aufweisen und in der Innenkontur der Tasche eine entsprechende Vertiefung angeordnet sein.

Vorzugsweise handelt es sich bei dem Gelenk um ein Kugelgelenk. Alternativ dazu ist das Gelenk ein Schwenkelement. Vorzugsweise verfügt das Gelenk über ein erstes Gelenkteil und ein zweites Gelenkteil, die bewegbar aneinander angeordnet sind. Das erste Gelenkteil ist aber vorteilhafterweise an einem ersten Ende des Kraftübertragungselementes angeordnet oder wird durch dieses gebildet. Das zweite Gelenkteil ist an der Befestigungseinrichtung befestigt oder zumindest befestigbar und bildet vorzugsweise eine Aufnahme für das erste Gelenkteil.

In einer bevorzugten Ausgestaltung sind das zweite Gelenkteil und die Befestigungseinrichtung einstückig ausgebildet. Vorzugsweise befindet sich unabhängig davon, ob die Befestigungseinrichtung mit dem zweiten Gelenkteil einstückig ausgebildet ist zwischen der Befestigungseinrichtung und dem zweiten Gelenkteil ein Schlitz oder eine Nut. Die Tasche verfügt vorzugsweise über eine Ausnehmung, die an die geometrische Ausgestaltung des Schlitzes oder der Nut angepasst ist. So wird der Rand der Ausnehmung der Tasche in den Schlitz oder die Nut eingeführt, wenn die Befestigungseinrichtung in die Tasche eingeführt wird. So wird eine formschlüssige Verbindung zwischen der Befestigungseinrichtung mit dem zweiten Gelenkteil einerseits und der Tasche andererseits erreicht.

Verfügt die Tasche über ein Verschlusselement, ist es von Vorteil, wenn dieses, nachdem die Tasche mittels des Verschlusselementes verschlossen wurde, in den Schlitz oder die Nut eingeschoben wird.

Vorzugsweise ist das Verschlusselement, beispielsweise die Lasche, u-förmig ausgebildet. Besonders bevorzugt befindet sich das Gelenk zwischen den Schenkeln des Verschlusselementes, wenn die Tasche durch das Verschlusselement verschlossen ist. Durch diese Ausgestaltung des Verschlusselementes wird erreicht, dass einerseits die Kontaktfläche, mit der das Verschlusselement an der Tasche oder dem Trägerelement anliegt, vergrößert wird, dies ist besonders vorteilhaft, wenn das Verschlusselement und die Tasche oder das Trägerelement über einen Klettverschluss verbunden werden, andererseits wird die Verbindung zwischen dem Verschlusselement und der Tasche oder dem Trägerelement vorzugsweise nur auf Scherung belastet und kann nicht oder nicht so leicht durch "Schälung" geöffnet werden, wenn das Gelenk eine entsprechende Kraft ausübt.

Mithilfe der beigefügten Abbildungen wird nachfolgend ein Ausführungsbeispiel der vorliegenden Erfindung näher erläutert. Es zeigt
- Figur 1 -: die schematische Darstellung eines Teils einer Vorrichtung gemäß einem Ausführungsbeispiel der vorliegenden Erfindung mit geschlossener Tasche,
- Figur 2 -: die Darstellung aus Figur 1 mit geöffneter Lasche,
- Figur 3 -: die schematische Darstellung einer Vorrichtung gemäß einem weiteren Ausführungsbeispiel der vorliegenden Erfindung,
- Figuren 4,5 -: Darstellungen entsprechend den Figuren 1 und 2 mit anderer Laschenform,
- Figuren 6, 7 -: zwei unterschiedlichen Ansichten einer Vorrichtung gemäß einem weiteren Ausführungsbeispiel der vorliegenden Erfindung.

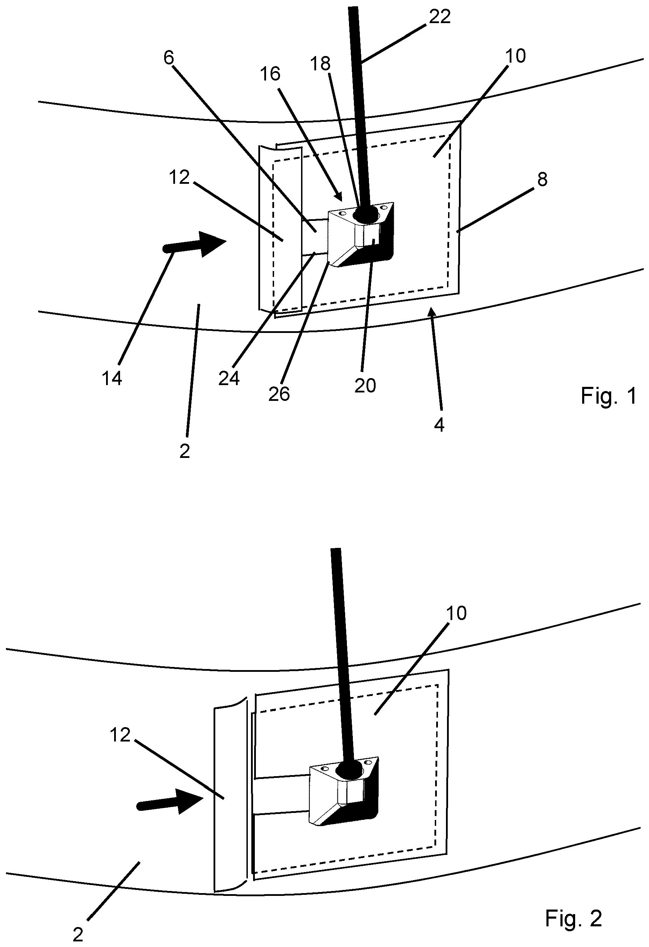

Figur 1 zeigt einen Teil einer Vorrichtung zum Unterstützen wenigstens eines Armes eines Benutzers. Dargestellt ist ein Hüftgurt, der im gezeigten Ausführungsbeispiel das Trägerelement 2 bildet und der im angelegten Zustand um den Rumpf des Benutzers herumgelegt wird. Er verfügt über eine Tasche 4, die als Rahmen ausgebildet ist und ein Fenster 6 aufweist. Das Fenster 6 ist eine Ausnehmung, die in der Tasche 4 vorhanden ist. Die Tasche 4 verfügt also über einen breiten Rand 8, der an drei Seiten, im gezeigten Ausführungsbeispiel oben, unten und rechts mit dem Material des Hüftgurtes 2 verbunden ist. Auf der vierten Seite, im gezeigten Ausführungsbeispiel links, ist der Rand 8 nicht mit dem Hüftgurt 2 verbunden, sondern bildet Öffnung der Tasche 4. Durch diese ist eine Befestigungseinrichtung 10 in die Tasche 4 eingeschoben worden. Die Befestigungseinrichtung ist durch die gestrichelte Linie dargestellt. Nachdem die Befestigungseinrichtung 10 in die Tasche 4 eingeschoben wurde, wurde die Öffnung der Tasche 4 durch die Lasche 12 verschlossen.

Die Lasche 12 ist über ein nicht dargestelltes Formschlusselement am Rand 8 der als Rahmen ausgebildeten Tasche 4 angeordnet und verhindert so, dass die Befestigungseinrichtung 10 versehentlich aus der Öffnung der Tasche 4 herausrutscht. Die Befestigungseinrichtung 10 ist entlang des Pfeils 14 in die Tasche 4 eingeschoben worden. Mit ihrem in Figur 1 linken Rand ist die Lasche 12 an dem Trägerelement 2, vorliegend also dem Hüftgurt 2 befestigt.

An der Befestigungseinrichtung 10 befindet sich eine Gelenk 16, das ein erstes Gelenkteil 18 und ein zweites Gelenkteil 20 aufweist. Das erste Gelenkteil 18 ist im gezeigten Ausführungsbeispiel als Kugel eines Kugelgelenks ausgebildet und am ersten Ende eines Kraftübertragungselementes 22 angeordnet. Das zweite Gelenkteil 20 hingegen bildet die Aufnahme für die Kugel und ist an der Befestigungseinrichtung 10 befestigt. Das zweite Gelenkteil 20 und damit das Gelenk 16 ragt nach außen, also vom Träger des Benutzers weg, durch das Fenster 6 der Tasche 4 hindurch.

Im in Figur 1 gezeigten Ausführungsbeispiel verfügt das Fenster 6 über einen Rand 24, der in eine Nut 26 eingeschoben ist, die sich zwischen der Befestigungseinrichtung 10 und dem zweiten Gelenkteil 20 befindet. So wird eine formschlüssige Verbindung erreicht. Figur 2 zeigt die Ausführungsform aus Figur 1, bei der die Lasche 12 geöffnet ist. In diesem Zustand der Lasche 12 kann die Befestigungseinrichtung 10 in die Tasche 4 eingeschoben oder aus ihr herausgezogen werden.

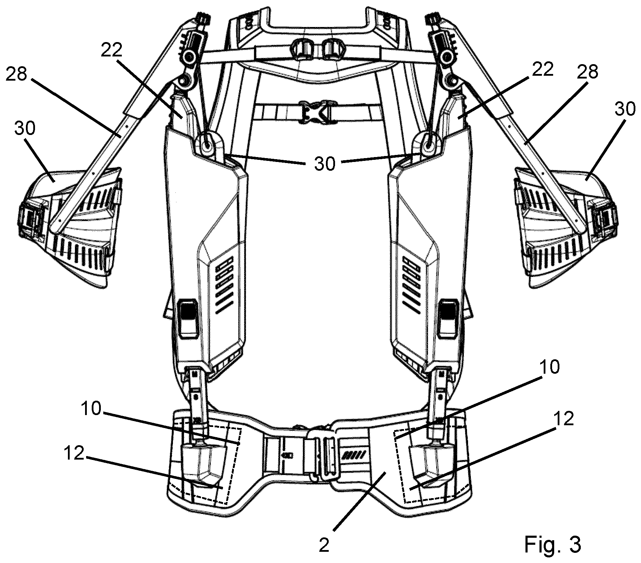

Figur 3 zeigt schematisch eine Vorrichtung gemäß einem Ausführungsbeispiel der vorliegenden Erfindung. Sie verfügt über zwei Armstützelemente 28, an denen jeweils eine Armschale 30 angeordnet ist, die an dem Arm des Benutzers der Vorrichtung angeordnet werden können. Über jeweils einen Aktuator 32, der im gezeigten Ausführungsbeispiel ein elastisches Element aufweist, wird eine Kraft auf das jeweilige Armstützelement 28 ausgeübt. Über die Kraftübertragungselemente 22 wird die Kraft auf das Trägerelement, das auch in dieser Ausgestaltung als Hüftgurt 2 ausgebildet ist, übertragen.

Der Hüftgurt 2 verfügt über zwei Taschen 4, in die jeweils eine der Befestigungseinrichtung 10 eingeschoben ist, die durch die gestrichelte Linie dargestellt sind. Man erkennt zudem, dass die Laschen 12 unter die zweiten Gelenkteile 20 ragen. Die Laschen 21 werden dazu in die Nut eingeschoben, die sich zwischen der Befestigungseinrichtung und dem eigentlichen zweiten Gelenkteil 20 befindet.

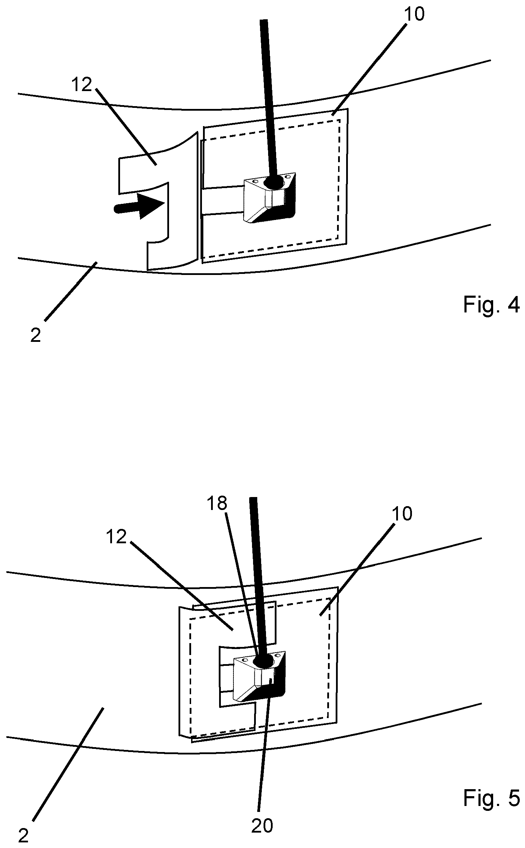

Die Figuren 4 und 5 entsprechend in ihrer Darstellung den Figuren 1 und 2. Der Hauptunterschied besteht in der Ausgestaltung der Lasche 12, die in der Darstellung der Figuren 4 und 5 u-förmig ausgebildet ist. Die Befestigungseinrichtung 10 ist analog zu der in den Figuren 1 und 2 dargestellten Ausführungsform gezeigt. Man erkennt in Figur 5, die den geschlossenen Zustand zeigt, in dem die Lasche 12 die Befestigungseinrichtung 10 verschließt, dass sich das Gelenk 16, das im gezeigten Ausführungsbeispiel das erste Gelenkteil 18 und das zweite Gelenkteil 20 umfasst, zwischen den Schenkeln der u-förmig ausgebildeten Lasche 12 positioniert ist.

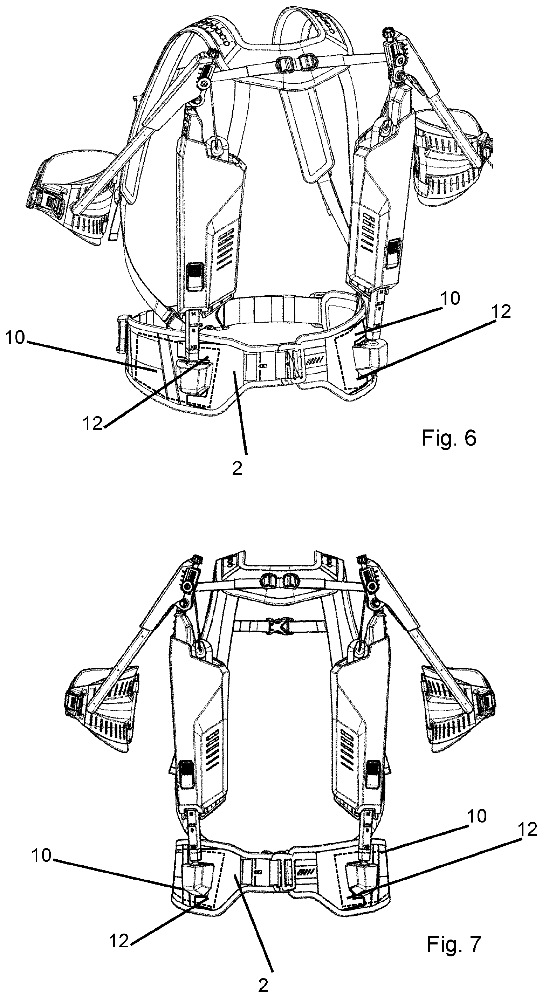

Die Figuren 6 und 7 zeigen eine Vorrichtung gemäß Ausführungsbeispiel in der vorliegenden Erfindung in unterschiedlichen Ansichten. Die Darstellungen entsprechen im Wesentlichen der Figur 3, unterscheiden sich von dieser jedoch durch die u-förmig ausgebildet Lasche 12.

### Bezugszeichenliste

- 2: Hüftgurt
- 4: Tasche
- 6: Fenster
- 8: Rand
- 10: Befestigungseinrichtung
- 12: Lasche
- 14: Pfeil
- 16: Gelenk
- 18: erstes Gelenkteil
- 20: zweites Gelenkteil
- 22: Kraftübertragungselement
- 24: Rand
- 26: Nut

## Patentansprüche

1. Vorrichtung zum Unterstützen wenigstens eines Armes eines Benutzers, wobei die Vorrichtung
- wenigstens ein Trägerelement (2) und
- wenigstens ein Kraftübertragungselement (22) aufweist, das mittels eines Gelenkes (16) an dem Trägerelement (2) angeordnet ist, wobei
das Gelenk (16) an einer Befestigungseinrichtung (10) angeordnet ist und das Trägerelement (2) eine Tasche (4) aufweist, in die die Befestigungseinrichtung (10) eingeschoben ist.

2. Vorrichtung nach Anspruch 1, **dadurch gekennzeichnet, dass** das Trägerelement (2) im angelegten Zustand der Vorrichtung im Bereich des Beckens des Benutzers angeordnet ist oder sich dorthin erstreckt, wobei das Trägerelement (2) vorzugsweise einen Hüftgurt, eine Jacke, eine Hose und/oder eine Weste aufweist oder ist.

3. Vorrichtung nach Anspruch 1, **dadurch gekennzeichnet, dass** die Tasche (4) als Rahmen oder Teilrahmen ausgebildet ist.

4. Vorrichtung nach Anspruch 1 oder 2, **dadurch gekennzeichnet, dass** die Vorrichtung wenigstens ein Verschlusselement, beispielsweise eine Lasche (12), aufweist, durch das die Tasche (4) verschließbar ist.

5. Vorrichtung nach einem der vorstehenden Ansprüche, **dadurch gekennzeichnet, dass** das Gelenk (16) in verschiedenen Positionen und/oder in verschiedenen Orientierungen an der Befestigungseinrichtung (10) angeordnet werden kann.

6. Vorrichtung nach einen der vorstehenden Ansprüche, **dadurch gekennzeichnet, dass** die Befestigungseinrichtung (10) aus einem Kunststoff, vorzugsweise einem plastisch oder elastisch verformbaren Kunststoff hergestellt ist.

7. Vorrichtung nach einem der vorstehenden Ansprüche, **dadurch gekennzeichnet, dass** die Befestigungseinrichtung (10) anatomisch geformt ist.

8. Vorrichtung nach einem der vorstehenden Ansprüche, **dadurch gekennzeichnet, dass** die Befestigungseinrichtung (10) seitlich, vorzugsweise in Längsrichtung des Trägerelementes (2), in die Tasche (4) eingeschoben ist.

9. Vorrichtung nach einem der vorstehenden Ansprüche, **dadurch gekennzeichnet, dass** die Tasche (4) und die Befestigungseinrichtung (10) derart ausgebildet sind, dass die Befestigungseinrichtung (10) in mehreren Positionen in der Tasche (4) arretierbar ist.

10. Vorrichtung nach Anspruch 7, **dadurch gekennzeichnet, dass** die Befestigungseinrichtung (10) in der Tasche (4) arretierbar ist, indem ein Formschlusselement der Tasche (4) mit einem Gegenelement der Befestigungseinrichtung (10) zusammenwirkt.

11. Vorrichtung nach einem der vorstehenden Ansprüche, **dadurch gekennzeichnet, dass** das Gelenk (16) ein Kugelgelenk ist.

12. Vorrichtung nach einem der vorstehenden Ansprüche, **dadurch gekennzeichnet, dass** das Gelenk (16) ein erstes Gelenkteil (18) und ein zweites Gelenkteil (20) aufweist, die bewegbar aneinander angeordnet sind, wobei
- das erste Gelenkteil (18) an einem ersten Ende des Kraftübertragungselementes (22) angeordnet oder durch das erste Ende des Kraftübertragungselementes (22) gebildet ist und
- das zweite Gelenkteil (20) an der Befestigungseinrichtung (10) befestigt ist.

13. Vorrichtung nach Anspruch 12, **dadurch gekennzeichnet, dass** das zweite Gelenkteil (20) und die Befestigungseinrichtung (10) einstückig ausgebildet sind.

14. Vorrichtung nach einem der Ansprüche 4 bis 13, **dadurch gekennzeichnet, dass** das Verschlusselement, beispielsweise die Lasche (12) u-förmig ausgebildet ist, wobei sich das Gelenk (16) vorzugsweise zwischen den Schenkeln des Verschlusselementes befindet, wenn die Tasche (4) durch das Verschlusselement verschlossen ist.

## Claims

1. A device for supporting at least one arm of a user, the device comprising
- at least one carrier device (2) and
- at least one force transmission element (22), which is arranged on the carrier element (2) by means of a joint (16), wherein the joint (16) is arranged on a fastening device (10) and the carrier element (2) has a pocket (4) into which the fastening device (10) is inserted.

2. The device according to claim 1, **characterized in that** the carrier element (2) is arranged in or extends to the user's pelvic area when the device is in the mounted state, wherein the carrier element (2) preferably comprises or is a waist strap, a jacket, a pair of trousers and/or a vest.

3. The device according to claim 1, **characterized in that** the pocket (4) is designed as a frame or partial frame.

4. The device according to claim 1 or 2, **characterized in that** the device has at least one sealing element, such as a tab (12), by way of which the pocket (4) can be sealed.

5. The device according to one of the preceding claims, **characterized in that** the joint (16) can be arranged on the fastening device (10) in various positions and/or in various orientations.

6. The device according to one of the preceding claims, **characterized in that** the fastening device (10) is made of a plastic, preferably a plastic with plastic or elastic ductility.

7. The device according to one of the preceding claims, **characterized in that** the fastening device (10) is anatomically shaped.

8. The device according to one of the preceding claims, **characterized in that** the fastening device (10) is inserted sideways into the pocket (4), preferably in the longitudinal direction of the carrier element (2).

9. The device according to one of the preceding claims, **characterized in that** the pocket (4) and the fastening device (10) are designed in such a way that the fastening device (10) can be locked in multiple positions in the pocket (4).

10. The device according to claim 7, **characterized in that** the fastening device (10) can be locked in the pocket (4) **in that** a form-fitting element of the pocket (4) engages with a counter element of the fastening device (10).

11. The device according to one of the preceding claims, **characterized in that** the joint (16) is a ball-and-socket joint.

12. The device according to one of the preceding claims, **characterized in that** the joint (16) has a first joint part (18) and a second joint part (20), which are movably arranged against each other, wherein
- the first joint part (18) is arranged at a first end of the force transmission element (22) or is formed by the first end of the force transmission element (22), and
- the second joint part (20) is fixed to the fastening element (10).

13. The device according to claim 12, **characterized in that** the second joint part (20) and the fastening device (10) are designed as a single piece.

14. The device according to one of the claims 4 to 13, **characterized in that** the sealing element, for example the tab (12), is designed to be u-shaped, wherein the joint (16) is preferably between the legs of the sealing element when the pocket (4) is sealed by the sealing element.

## Revendications

1. Dispositif pour soutenir au moins un bras d'un utilisateur, le dispositif comprenant
- au moins un élément porteur (2), et
- au moins un élément de transmission de force (22) qui est agencé sur l'élément porteur (2) au moyen d'une articulation (16),
l'articulation (16) étant agencée sur un organe de fixation (10), et l'élément porteur (2) présentant une poche (4) dans laquelle l'organe de fixation (10) est inséré.

2. Dispositif selon la revendication 1,
**caractérisé en ce que**, à l'état appliqué du dispositif, l'élément porteur (2) est agencé dans la zone du bassin de l'utilisateur ou s'étend vers ladite zone, de préférence, l'élément porteur (2) comprenant ou étant une sangle abdominale, une veste, un pantalon et/ou un gilet.

3. Dispositif selon la revendication 1,
**caractérisé en ce que** la poche (4) est conçue comme un cadre ou une partie de cadre.

4. Dispositif selon la revendication 1 ou 2,
**caractérisé en ce que** le dispositif comprend au moins un élément de fermeture, par exemple une languette (12), permettant de fermer la poche (4).

5. Dispositif selon l'une des revendications précédentes,
**caractérisé en ce que** l'articulation (16) peut être agencée sur l'organe de fixation (10) dans différentes positions et/ou selon différentes orientations.

6. Dispositif selon l'une des revendications précédentes,
**caractérisé en ce que** l'organe de fixation (10) est fabriqué en matière synthétique, de préférence en matière synthétique déformable plastiquement ou élastiquement.

7. Dispositif selon l'une des revendications précédentes,
**caractérisé en ce que** l'organe de fixation (10) est de forme anatomique.

8. Dispositif selon l'une des revendications précédentes,
**caractérisé en ce que** l'organe de fixation (10) est inséré latéralement dans la poche (4), de préférence dans la direction longitudinale de l'élément porteur (2).

9. Dispositif selon l'une des revendications précédentes,
**caractérisé en ce que** la poche (4) et l'organe de fixation (10) sont conçus de telle sorte que l'organe de fixation (10) peut être bloqué dans plusieurs positions dans la poche (4).

10. Dispositif selon la revendication 7,
**caractérisé en ce que** l'organe de fixation (10) peut être bloqué dans la poche (4) du fait qu'un élément à engagement positif de la poche (4) coopère avec un élément antagoniste de l'organe de fixation (10).

11. Dispositif selon l'une des revendications précédentes,
**caractérisé en ce que** l'articulation (16) est une articulation à rotule.

12. Dispositif selon l'une des revendications précédentes,
**caractérisé en ce que** l'articulation (16) comprend une première partie d'articulation (18) et une deuxième partie d'articulation (20) agencées de manière mobile l'une sur l'autre, sachant que
- la première partie d'articulation (18) est agencée à une première extrémité de l'élément de transmission de force (22) ou est formée par la première extrémité de l'élément de transmission de force (22), et
- la deuxième partie d'articulation (20) est fixée à l'organe de fixation (10).

13. Dispositif selon la revendication 12,
**caractérisé en ce que** la deuxième partie d'articulation (20) et l'organe de fixation (10) sont réalisés d'un seul tenant.

14. Dispositif selon l'une des revendications 4 à 13,
**caractérisé en ce que** l'élément de fermeture, par exemple la languette (12), est en forme de U, l'articulation (16) étant de préférence située entre les branches de l'élément de fermeture lorsque la poche (4) est fermée par l'élément de fermeture.
